Europäisches Patentamt

European Patent Office

Office européen des brevets

(1) Publication number: **0 163 826**
**B1**

# EUROPEAN PATENT SPECIFICATION

(4) Date of publication of patent specification: 01.06.88

(2) Application number: 85103152.6

(2) Date of filing: 17.09.82

(8) Publication number of the earlier application in accordance with Art. 76 EPC: **0 076 406**

(5) Int. Cl.⁴: **B 08 B 9/08,** G 01 N 35/00

(5) Apparatus for removing liquid from the outer surface of a pipette tube.

(3) Priority: 28.09.81 US 306206

(4) Date of publication of application:
11.12.85 Bulletin 85/50

(4) Publication of the grant of the patent:
01.06.88 Bulletin 88/22

(8) Designated Contracting States:
DE FR GB IT SE

(5) References cited:
US-A-2 042 255
US-A-2 090 427
US-A-4 131 426

(7) Proprietor: **MILES INC.**
**1127 Myrtle Street**
**Elkhart Indiana 46514 (US)**

(7) Inventor: **Johnson, Leighton C.**
**R.R. 2 Box 344 A**
**Edwardsburg Michigan 49112 (US)**

(7) Representative: **Adrian, Albert, Dr. et al**
**c/o BAYER AG Konzernverwaltung RP**
**Patentabteilung**
**D-5090 Leverkusen 1, Bayerwerk (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

Background of the Invention

This invention relates in general to the field of clinical analytical chemistry, and more particularly to an apparatus for removing liquid from the outer surface of an extended member, comprising a first absorbent tape and a second absorbent tape wound around and extending between a supply spool and a takeup spool.

One common method for such analysis involves mixing a precisely measured small volume of a liquid analyte sample with a precisely measured small volume of one or more liquid reagents, incubating the mixture, measuring the optical properties of the incubated mixture, and comparing it with the optical properties of the sample measured prior to mixing the reagent. Such method and a suitable apparatus therefor are subject of the copending application Ep—A—0,076,406 (application in accordance with Art. 76 EPC).

The removal of excess liquid from the pipette tube is important with regard to obtaining an improved quality and reliability of the analysis which is subsequently carried out, in particular, when using the pipette tube in connection with an apparatus, which is described in the above-mentioned copending application.

In carrying out analyses by the foregoing methods, the known art utilizes various combinations of precision liquid pipetting devices, pumps, mixers, light sources, light detectors, cuvettes and pipette wiping means. Sample and reagent volumes are typically measured in precision pipetting devices and are mixed in a mixing receptacle. After incubation of the mixed sample and reagent, as necessary, the pipetting device is used to transfer the incubated mixture to a cuvette for absorbance measurement.

Typical of the general type of precision pipetting device known in the art are those disclosed in Drummond, et al., U.S. Patent No. 3,606,086, and Allen, U.S. Patent No. 3,815,790. Devices of this type include an elongated cylindrical barrel, at one end of which a pipette tube is coaxially mounted. A plunger or piston is axially movable within the pipette tube and is carried by a spring-loaded holder movable axially within and projecting from the other end of the barrel.

Because precision measurement of liquids by pipetting devices requires that liquid adhering to the outer surface thereof be removed, various means have been developed for wiping such surfaces, as by causing the pipette to pierce, or to pass through a hole of small diameter formed in a layer of bibulous material. A wiper apparatus of this kind is described in U.S. Patent No. 4,131,426. The wiper includes means for receiving a supply of absorbent wiping material in ribbon form, and a spool for taking up the ribbon, as well as means defining a path along which said ribbon will move between the supply means and the takeup spool. A pair of guideposts are spaced closely apart from the tip of the sample dispensing tube and adapted to urge said ribbon into wiping contact with said tip. Clutches or the like are provided for maintaining said ribbon under tension. Since there is no actuating means for moving the ribbons against the tube and tip, this device must rely upon maintaining adequate tension on the ribbons in positioning the guideposts sufficiently close to the tube. This is, however, a very critical requirement. Another problem with this design is the fact that when the ribbons break or new ribbons are installed, the threading of the ribbons is complicated and difficult due to the close tolerances involved. Further, the tensioning means (guideposts) are so positioned that as the ribbons move, the guideposts act as squeegees. If sufficient moisture is present, these squeegees force the moisture backward counter to the movement of the ribbons and against the tip of the tube in an undesired manner.

Thus, the procedures and apparatus which were hitherto developed have not been of a type which is well adapted to automation on the one hand and on the other hand complies with a high standard of accuracy and reproducibility.

Object of the Invention

With the foregoing in mind, it is a principal object of the present invention to provide for novel means adaptable to automated procedures to remove liquid from the outer surface of a pipette tube to ensure precision volumetric measurement, and simultaneously providing for a higher accuracy and reproducibility of the analysis which is carried out with the pipette tube.

As the description proceeds with reference to the accompanying drawings, other and further objects and advantages of the invention will become apparent to those skilled in the art.

Summary of the Invention

According to the invention, this object is solved by an apparatus according to the preamble of claim 1, comprising

a first tape spacing member and a second tape spacing member which maintain the first absorbent tape and the second absorbent tape in laterally spaced relationship between supply spool and takeup spool, thereby allowing said extended member to be disposed between said absorbent tapes;

a first drive roller and a second drive roller associated, respectively, with a first cooperating pressure roller and a second cooperating pressure roller for advancing the first absorbent tape and the second absorbent tape from the supply spool to the takeup spool, said first drive roller and said first cooperating pressure roller interposed between said second spacing member and supply spool and said second drive roller and said second cooperating pressure roller interposed between said first spacing member and said takeup spool;

actuating means for moving said first absorbent tape and said second absorbent tape into contact with the outer surface portions of the said extended member disposed therebetween; and

means for advancing said first drive roller and said second drive roller simultaneously to thereby advance the first and second absorbent tapes, thereby substituting for the advanced tapes dry absorbent tape from supply spool for contact with said extended member.

Brief Description of the Drawings

Figure 1 is a perspective semidiagrammatic view of the portion of the apparatus by which liquid is removed from the outer surface of a pipette tube, part of the pipette/cuvette being shown in phantom lines.

Figure 2 shows a fragment of Figure 1 and illustrates the pressing of the absorbent tapes around the lower end of the pipette tube by the movable pressure members.

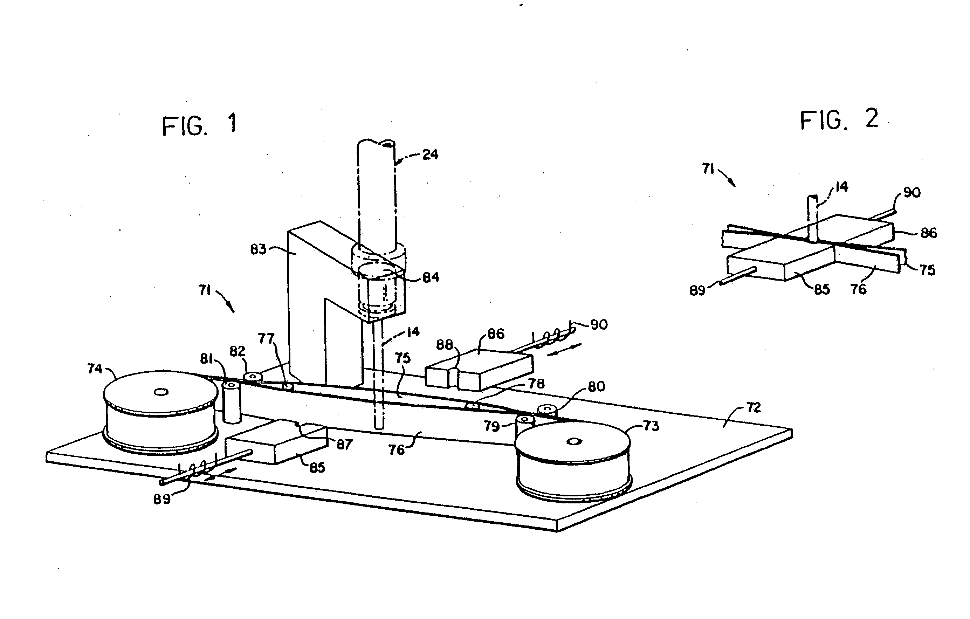

It will be understood that, because of the lens effect of the meniscus formed by the liquid sample at the lower end of the glass tube 14 of a pipette, it is important for accuracy and reproducibility of an optical analysis using the pipette as a cuvette, that said meniscus be consistently reproducible. Since, as will hereinafter be apparent, the analyte sample is introduced into tube 14 by aspiration from a quantity thereof in a receptacle, the present invention provides means for removing liquid from the outer surface of the tube 14 after such aspiration to thereby insure reproducibility of the meniscus. Absent such removal, liquid on the outer surface of the tube 14 might flow downwardly to the end of the tube and interfere with the formation of a consistent meniscus. Figures 1 and 2 illustrate the presently preferred form of apparatus for removal of liquid from the outer surface of the outer end portion of a pipette tube.

According to Figures 1 and 2 the apparatus 71 is designed for removal of liquid from the outer surface of the tube 14 of a device 24. Apparatus 71 comprises a base member 72 on which are suitable mounted a supply spool 73 and a takeup spool 74 wound around which and extending between absorbent tapes 75 and 76. The tapes 75 and 76 may be made of any suitable adsorbent material, for example hydrophilic foam plastic or bibulous paper. Extending upwardly from the base 72 are a pair of cylindrical tape-spacing members 77 and 78 which normally hold the portions of the tapes 75 and 76 extending between the said members in laterally spaced relation as shown.

Interposed between the member 78 and supply spool 73 are a drive roller 79 and a cooperating pressure roller 80. Similarly interposed between the takeup spool 74 and the member 77 is a drive roller 81 and a cooperating pressure roller 82. The supply spool 73 is preferably an idler, whereas the takeup spool 74 may be continuously driven through a slip clutch mechanism which limits the maximum tension which can be exerted by this spool 74 on the tapes 75 and 76 wound thereon. Also mounted on the base member 72 is an upstanding support member 83 having a vertical bore 84 therein. The member 83 is adapted to support a pipette/cuvette device 24 placed in the bore 84 thereof as shown in phantom lines in Figure 1. With the device 24 thus supported, the glass tube 14 thereof extends downwardly with its lower end disposed between the adjacent portions of the spaced tapes 75 and 76 as shown.

Means is provided for moving the portions of the tapes 75 and 76 adjacent the tube 14 into snug contact with the outer surface of the tube 14 so that said tape portions absorb liquid on the outer surface of said tube. To this end, the apparatus 71 is provided with aligned pressure members 85 and 86 mounted on opposite sides of the tapes 75 and 76 as shown. The facing edge portions of the members 85 and 86 are formed with complemental semicylindrical notches 87 and 88, respectively, which notches have a radius only slightly larger than the radius of the outer surface tube 14. Members 85 and 86 are suitably mounted for reciprocal movement toward and away from each other. Such movement may be effected by any suitable actuating means, solenoid actuating mechanisms 89 and 90 being shown diagrammatically associated with the members 85 and 86 respectively.

Figure 2 illustrates how the portions of the tape 75 and 76 adjacent the tube 14 are pressed into contact with the outer surface of the lower end of the tube 14 by movement of the members 85 and 86 toward each other. Upon retraction of the members 85 and 86 to their positions shown in Figure 1, the tapes 75 and 76 will return generally to the positions thereof shown in that Figure, and the device 24 can be removed and transferred to a suitable apparatus for absorbance measurement. The tapes 75 and 76 are then advanced by simultaneous operation of the drive rollers 79 and 81 to bring a fresh portion of each of tapes 75 and 76 between the spacer members 77 and 78. A succeeding device 24 may then be placed in the bore 84 of the support member 83 for removal of liquid from the outer surface of the tube 14 thereof.

It will be apparent to those skilled in the art that the apparatus 71 of Figures 1 and 2, when provided with appropriate, well-known control means, is well adapted to automated procedures.

Further, the novel means for removing liquid from the outer surface of tube 14 does not only provide for precise meniscus formation at the outer end of said tube, but it also minimizes liquid cross-contamination between successive analyzing method sequences, as well as preventing contamination of portions of the analysis device. Thus the invention provides for a new useful tool for considerably improving the qquality of analysis methods, wherein the pipette tube simultaneously serves as a cuvette for the measurement of optical properties, for instance absorbance or fluorescence.

Various changes, adaptations and modifications of the illustrated embodiments of the invention will be apparent to those skilled in the art and may be made without departing from the scope of the invention. All of such changes, adaptations and modifications are contemplated as may come within the scope of the appended claims.

**Claim**

Apparatus for removing liquid from the outer surface of an extended member (14) comprising a first absorbent tape (75) and a second absorbent tape (76) wound around and extending between a supply spool (73) and a takeup spool (74), characterized by

a first tape spacing member (77) and a second tape spacing member (78) which maintain the first absorbent tape (75) and the second absorbent tape (76) in laterally spaced relationship between supply spool (73) and takeup spool (74) thereby allowing said extended member (14) to be disposed between said absorbent tapes (75, 76);

a first drive roller (79) and a second drive roller (81) associated, respectively, with a first cooperating pressure roller (80) and a second cooperating pressure roller (82) for advancing the first absorbent tape (75) and the second absorbent tape (76) from the supply spool (73) to the takeup spool (74), said first drive roller (79) and said first cooperating pressure roller (80) interposed between said second spacing member (78) and supply spool (73) and said second drive roller (81) and said second cooperating pressure roller (82) interposed between said first spacing member (77) and said takeup spool (74);

actuating means (89, 90) for moving said first absorbent tape (75) and said second absorbent tape (76) into contact with the outer surface portions of the said extended member (14) disposed therebetween; and

means for advancing said first drive roller (79) and said second drive roller (81) simultaneously to thereby advance the first and second absorbent tapes (75, 76), thereby substituting for the advanced tapes dry absorbent tape (75, 76) from supply spool (73) for contact with said extended member (14).

**Patentanspruch**

Apparat zum Entfernen von Flüssigkeit von der Außenfläche eines länglichen Teils (14), mit einem ersten absorbierenden Band (75) und einem zweiten absorbierenden Band (76), die um eine Versorgungsspule (73) und eine Aufwickelspule (74) gewickelt sind und zwischen diesen verlaufen, gekennzeichnet durch

einen ersten Bandbeabstandungsteil (77) und einem zweiten Bandbeabstandungsteil (78), die das erste absorbierende Band (75) und das zweite absorbierende Band (76) in seitlichem Abstand zueinander zwischen der Versorgungsspule (73) und der Aufwickelspule (74) halten, damit das längliche Teil (14) zwischen diesen absorbierenden Bänder (75, 76) angeordnet werden kann;

eine erste Antriebsrolle (79) bzw. eine zugeordnete zweite Antriebsrolle (81) zusammen mit einer ersten zusammenwirkenden Druckrolle (80) und einer zweiten zusammenwirkenden Druckrolle (82) zum Vorbewegen des ersten absorbierenden Bandes (75) und des zweiten absorbierenden Bandes (76) von der Versorgungsspule (73) zur Aufwickelspule (74), wobei die erste Antriebsrolle (79) und die damit zusammenwirkende erste Druckrolle (80) zwischen dem zweiten Beabstandungsteil (78) und der Versorgungsspule (73) und die zweite Antriebsrolle (81) und die damit zusammenwirkende zweite Druckrolle (82) zwischen dem ersten Beabstandungsteil (77) und der Aufwickelspule (74) angeordnet ist;

Betätigungsmittel (89, 90) zum Bewegen des ersten absorbierenden Bandes (75) und des zweiten absorbierenden Bandes (76) in Berührung mit den Außenflächenabschnitten des dazwischen angeordneten länglichen Teiles (14), und Mittel zum gleichzeitigen Vorbewegen der ersten Antriebsrolle (79) und der zweiten Antriebsrolle (81), um dadurch das erste und zweite absorbierende Band (75, 76) vorzubewegen, um dadurch die vorbewegten Bänder durch trockene absorbierende Bänder (75, 76) von der Versorgungsspule (73) für die Berührung mit dem länglichen Teil (14) zu ersetzen.

**Revendication**

Appareil pour enlever le liquide de la surface extérieure d'un élément de forme allongée (14), comportant une première bande absorbante (75) et une seconde bande absorbante (76) enroulées autour d'une bobine débitrice (73) et d'une bobine réceptrice (74) et s'étendant entre les bobines, caractérisé par

un premier élément (77) d'écartement des bandes et un second élément (78) d'écartement des bandes qui maintiennent la première bande absorbante (75) et la seconde bande absorbante (76) à une certaine distance latérale l'une de l'autre entre la bobine débitrice (73) et la bobine réceptrice (74), permettant ainsi de disposer l'élément (14) de forme allongée entre lesdites bandes absorbantes (75, 76);

un premier rouleau d'entraînement (79) et un second rouleau d'entraînement (81) associés, respectivement, avec un premier rouleau de pression collaborant (80) et un second rouleau de pression collaborant (75) pour faire avancer la première bande absorbante (75) et la seconde bande absorbante (76) pour passer de la bobine débitrice (73) à la bobine réceptrice (74), ledit premier rouleau d'entraînement (79) et ledit premier rouleau de pression collaborant (80) étant interposés entre ledit second élément d'écartement (78) et la bobine débitrice (73) et ledit second rouleau d'entraînement (81) et ledit second rouleau de pression collaborant (82) étant interposés entre ledit premier élément d'écartement (77) et ladite bobine réceptrice (74);

des moyens de manoeuvre (89, 90) pour amener ladite première bande absorbante (75) et ladite seconde bande absorbante (76) en contact avec les portions de surface extérieure dudit élément de forme allongée (14) disposé entre elles; et

des moyens pour faire avancer simultanément ledit premier rouleau d'entraînement (79) et ledit second rouleau d'entraînement (81) pour, de ce fait, faire avancer la première bande absorbante et la seconde bande absorbante (75, 76), remplaçant ainsi les bandes qui ont avancé par une bande absorbante sèche (75, 76) provenant de la bobine débitrice (73) pour venir en contact avec ledit élément (14) de forme allongée.

FIG. 1

FIG. 2

0 163 826